# EUROPÄISCHE PATENTSCHRIFT

(11) **EP 1 256 270 B1**
(45) Veröffentlichungstag und Bekanntmachung des Hinweises auf die Patenterteilung: **19.04.2006**
(21) Anmeldenummer: 02100450.2
(22) Anmeldetag: 06.05.2002
(51) Int. Cl.: A01D 41/12

(54) **Erntebergungseinrichtung**
Harvest collecting device
Arrangement pour le ramassage de la récolte

(30) Priorität: 09.05.2001 US 851828
(43) Veröffentlichungstag der Anmeldung: 13.11.2002
(73) Patentinhaber: DEERE & COMPANY, Moline, Illinois 61265-8098 (US)
(72) Erfinder: Coers, Bruce Alan, 61257, Hillsdale (US); Jensen, Roderick James, 61265, Moline (US); Chaney, Mark Michael, 61273, Orion (US)
(74) Vertreter: Holst, Sönke

(56) Entgegenhaltungen:
- EP-A- 1 004 234
- WO-A-82/01298
- DE-U- 20 001 144
- FR-A- 1 442 918
- FR-A- 2 201 820
- FR-A- 2 496 883
- GB-A- 911 361
- DATABASE WPI Section PQ, Week 198918 Derwent Publications Ltd., London, GB; Class P12, AN 1989-137017 XP002203154 & SU 1 435 189 A (BELOTSERK AGRIC EQUIP WK), 7. November 1988 (1988-11-07)

## Beschreibung

Die Erfindung betrifft eine Erntegutbergungseinrichtung mit einem Rahmen, einer drehbar am Rahmen befestigten Fördereinrichtung, einem Fördereinrichtungsantrieb zum Rotationsantrieb der Fördereinrichtung, einem Drehmomentsensor, der eingerichtet ist, das auf die Fördereinrichtung wirkende Drehmoment zu messen und ein aktuelles Drehmomentsignal bereitzustellen, und mit einer Steuerung, die einen Speicher aufweist, in dem ein maximales gewünschtes Drehmomentsignal gespeichert ist, wobei die Steuerung eingerichtet ist, ein Anhalten der Fördereinrichtung zu veranlassen, wenn das aktuelle Drehmomentsignal das maximale gewünschte Drehmomentsignal überschreitet.

Landwirtschaftliche Mähdrescher sind große Maschinen, die landwirtschaftliches Gut ernten, dreschen, trennen und reinigen. Das gewonnene saubere Korn wird in einem am Mähdrescher angeordneten Korntank gespeichert. Das saubere Korn kann dann vom Korntank durch einen Entladeschneckenförderer einem Lastwagen, Anhänger oder anderem Aufnahmegefäß zugeführt werden.

Eine Erntegutbergungseinrichtung am vorderen Ende des Mähdreschers erntet das Gut. Die Erntegutbergungseinrichtung kann ein Schneidwerk oder eine Aufsammeleinrichtung (Pick-Up) sein. Ein Schneidwerk weist eine Mäheinrichtung zum Abschneiden des stehenden Gutes auf. Das abgeschnittene Gut fällt auf das Schneidwerk und wird von einer Förderschnecke übernommen, die das geerntete Gut einem Schrägförderer eines Mähdreschers zuführt. Ein Mähdrescher mit einem Schneidwerk mit einer Förderschnecke ist in der GB 911 361 A beschrieben. Eine Aufsammeleinrichtung ist mit einem Aufsammelzusammenbau versehen, um auf einem Feld liegendes, abgeschnittenes Gut aufzunehmen. Das geschnittene Gut wird einer Förderschnecke zugeführt, die das geerntete Gut einem Schrägförderer zuführt. Die Förderschnecken sowohl des Schneidwerks als auch der Aufsammeleinrichtung sind mit Wellen zur Steuerung von Fingern ausgestattet. Die Wellen zur Steuerung der Finger sind in den Förderschnecken angeordnet. Jede Welle zur Steuerung der Finger ist mit einer Reihe einziehbarer Finger versehen, die sich aus der Förderschnecke nach außen erstrecken und in sie hineinziehen. Die einziehbaren Finger werden verwendet, um das Gut in den Schrägförderer einzuwerfen.

Die Antriebe der Förderschnecken sind in der Regel mit einer Rutschkopplung ausgestattet, um einen durch eine übermäßige Last an Erntegut bedingten Schaden an der Förderschnecke und den umgebenden Komponenten zu vermeiden oder wenigstens zu reduzieren. Es wurde herausgefunden, dass diese Kopplungen unterschiedlich sind und bei ungewünschten Drehmomenten durchrutschen. Sie verhindern nicht immer Schäden an den einziehbaren Fingern.

In der SU 1 435 189 A und dem zugehörigen Derwent-Abstract wird eine Erntebergungseinrichtung eingangs genannter Art beschrieben. Das Antriebsmoment einer Fördereinrichtung für Futter wird durch einen Sensor gemessen. Der Ausgangswert des Sensors wird mit einem festgelegten Schwellenwert verglichen und im Falle einer Überschreitung wird eine Bremse aktiviert, um die Fördereinrichtung anzuhalten.

Die der Erfindung zugrunde liegende Aufgabe wird darin gesehen, eine Erntegutbergungseinrichtung bereitzustellen, bei der die in einer Förderschnecke angeordneten einziehbaren Finger besser vor übermäßigen Belastungen geschützt sind.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird das Drehmoment gemessen, das auf eine Fördereinrichtung wirkt. Ein Drehmomentsensor stellt ein aktuelles Drehmomentsignal bereit. Es wird einer Steuerung zugeführt und von ihr mit einem maximalen gewünschten Drehmomentsignal verglichen, das in einem Speicher abgelegt ist. Falls das aktuelle Drehmomentsignal größer als das maximale gewünschte Drehmomentsignal ist, veranlasst die Steuerung, dass die Fördereinrichtung angehalten wird, um Schäden zu vermeiden oder wenigstens einzuschränken. Erfindungsgemäß ist die Fördereinrichtung eine Förderschnecke mit einziehbaren Fingern, die drehbar auf einer exzentrisch im Innern der Förderschnecke angeordneten Welle zur Steuerung der Bewegung der Finger gelagert sind. Die Finger dienen zur Förderung des Ernteguts. Es wäre auch eine zentrische Anordnung der Welle denkbar, auf der Finger gelagert sind, die sich dann nicht radial verschieben. Der Drehmomentsensor erfasst das Drehmoment, das auf die Welle wirkt. Dieses Drehmoment ist ein Maß für das auf die Finger wirkende Drehmoment und somit ihre mechanische Belastung. Überschreitet das aktuelle Steuerwellendrehmomentsignal ein maximales gewünschtes Steuerwellendrehmomentsignal, veranlasst die Steuerung, dass die Förderschnecke angehalten wird. Wegen des Trägheitsmoments der Förderschnecke ist zur Vermeidung von Schäden an den Fingern die Verwendung einer Bremse vorteilhaft.

Zusätzlich kann ein anderer Drehmomentsensor das auf die Förderschnecke wirkende Drehmoment messen und ein aktuelles Förderschneckendrehmomentsignal liefern. Falls es das maximale gewünschte Förderschneckendrehmomentsignal überschreitet, wird die Förderschnecke angehalten, beispielsweise durch Ausrücken einer Kupplung, die zwischen dem Förderschneckenantrieb und der Förderschnecke angeordnet ist.

Sobald einer der erwähnten Drehmomentsensoren ein aktuelles Drehmomentsignal liefert, das das zugeordnete, maximale gewünschte Drehmomentsignal überschreitet, wird die Fördereinrichtung gestoppt. Sie wird durch Abschalten des Antriebs angehalten, wenn das aktuelle Förderschneckendrehmomentsignal das maximale gewünschte Förderschneckendrehmomentsignal überschreitet. Wenn das aktuelle Steuerwellendrehmomentsignal das maximale gewünschte Steuerwellendrehmomentsignal übersteigt, wird die Förderschnecke durch Bremsen angehalten.

Das maximal zulässige Drehmoment kann von äußeren Bedingungen abhängen, beispielsweise von der Art des Ernteguts. Es ist daher sinnvoll, eine Bedienereingabeeinrichtung vorzusehen, mit der das maximale gewünschte Drehmoment definierbar ist. Es können aber alternativ oder zusätzlich entsprechende Sensoren verwendet werden.

In den Zeichnungen ist ein nachfolgend näher beschriebenes Ausführungsbeispiel der Erfindung dargestellt. Es zeigt:
- Fig. 1: eine halbschematische Seitenansicht eines Mähdreschers, und

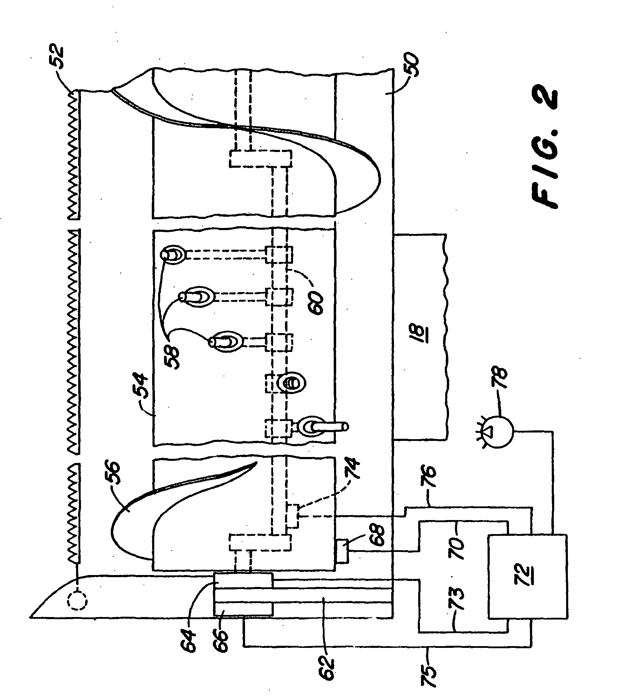

- Fig. 2: ein Schema einer erfindungsgemäßen Antriebseinrichtung einer Förderschnecke.

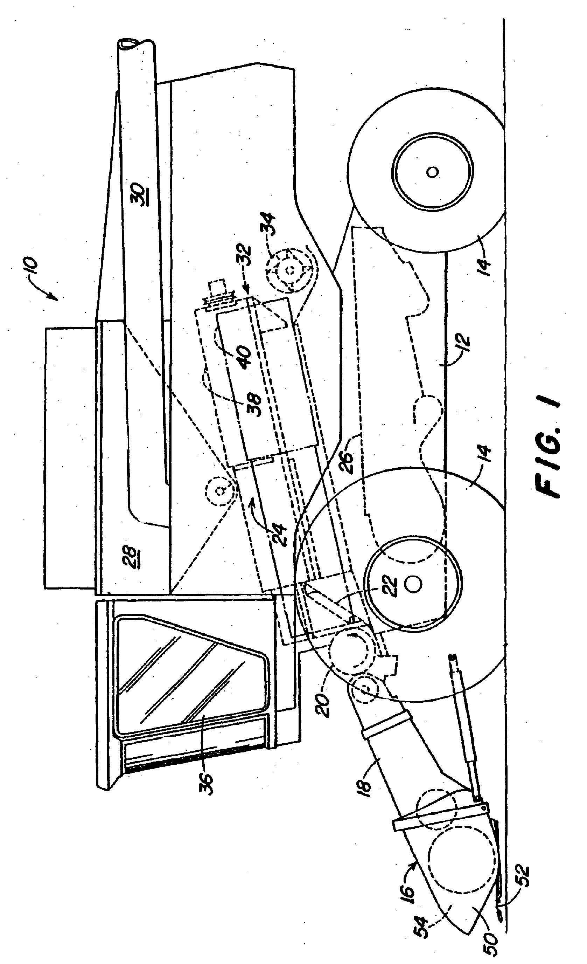

Die Figur 1 zeigt einen landwirtschaftlichen Mähdrescher 10 mit einer tragenden Struktur 12, an der sich im Eingriff mit dem Erdboden stehende Räder 14 angebracht sind. Obwohl der Mähdrescher 10 mit Rädern dargestellt ist, könnte er auch mit zwei oder vier Gleisketten versehen sein. Eine Erntegutbergungseinrichtung 16 wird zum Ernten von Erntegut und um es einem Schrägförderer 18 zuzuführen benutzt. Der Schrägförderer 18 enthält eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren Dresch- und Trenneinrichtung 24 zu. Die dargestellte Dresch- und Trenneinrichtung 24 ist längs im Mähdrescher angeordnet, sie könnte aber auch in anderen Orientierungen relativ zur Längsachse des Mähdreschers 10 angeordnet sein. Obwohl die vorliegende Erfindung anhand einer Dresch- und Trenneinrichtung 24 mit einem Rotor beschrieben wird, könnte sie auch an einem Mähdrescher 10 mit einer konventionellen, quer angeordneten Dreschtrommel, die mit einem Dreschkorb zusammenwirkt, verwendet werden.

Die rotierende Dresch- und Trenneinrichtung 24 drischt und trennt das geerntete Gut. Das Korn und die Spreu fallen durch Roste am Boden der Dresch- und Trenneinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 einem Lastwagen oder Anhänger zugeführt werden.

Ausgedroschenes, vom Korn befreites Stroh wird von der Dresch- und Trenneinrichtung 24 durch einen Auslass 32 einer Auswurftrommel 34 zugeführt. Die Auswurftrommel 34 stößt das Stroh wiederum an der Rückseite des Mähdreschers 10 aus. Es ist anzumerken, dass die Auswurftrommel 34 das vom Korn befreite Gut auch direkt einem Strohhäcksler zuführen könnte. Der Betrieb des Mähdreschers 10 wird von einer Bedienerkabine 36 aus gesteuert.

Die Dresch- und Trenneinrichtung 24 umfasst ein zylindrisches Rotorgehäuse 38 und einen im Rotorgehäuse 38 angeordneten, drehbaren Rotor 40. Der vordere Teil des Rotors 40 und das Rotorgehäuse 38 definieren einen Beschickungsabschnitt. Stromab des Beschickungsabschnitts sind ein Dreschabschnitt, ein Trennabschnitt und ein Auslassabschnitt. Der Rotor 40 ist im Beschickungsabschnitt mit einer Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts befindet sich der Dreschabschnitt. Im Dreschabschnitt weist der Rotor 40 eine zylindrische Rotortrommel auf, die mit einer Anzahl von Dreschelementen versehen ist, um das vom Beschickungsabschnitt erhaltene Gut zu dreschen. Stromab des Dreschabschnitts befindet sich der Trennabschnitt, in dem das im gedroschenen Gut noch enthaltene Korn freigesetzt wird und durch ein bodenseitiges Rost im Rotorgehäuse 38 hindurch in das Reinigungssystem 26 fällt. Der Trennabschnitt geht in den Auslassabschnitt über, in dem das vom Korn befreite Gut (Stroh) aus der Dresch- und Trenneinrichtung 24 ausgestoßen wird.

Die in Figur 1 dargestellte Erntegutbergungseinrichtung 16 ist ein Schneidwerk mit einem Rahmen 50, einer Mäheinrichtung 52 und einer nicht gezeigten Haspel. Die Haspel drückt das stehende Gut gegen die Mäheinrichtung 52, die das Gut abschneidet und lässt es auf den Boden des Rahmens 50 fallen. Das abgeschnittene Gut wird über den Boden nach hinten gedrückt und der quer angeordneten Förderschnecke 54 zugeführt. Die Förderschnecke 54 ist mit wendelförmigen Mitnehmern 56 ausgestattet, um das abgeschnittene Gut zur Mitte des Rahmens 50 zu fördern, von wo es dem Schrägförderer 18 zugeführt wird.

Die Förderschnecke 54 ist mit einziehbaren Fingern 58 ausgestattet. Die einziehbaren Finger 58 sind frei drehbar an einer Welle 60 zur Steuerung der Finger 58 befestigt, die innerhalb der Förderschnecke 54 angeordnet ist. Die Welle 60 zur Steuerung der Finger 58 ist in der Förderschnecke 54 exzentrisch befestigt, so dass die Finger sich aus der Förderschnecke 54 hinaus erstrecken und sich wieder in sie zurückziehen, wenn sich die Förderschnecke 54 dreht. Die Förderschnecke 54 wird durch einen Förderschneckenantrieb 62 angetrieben. In der Regel ist der Förderschneckenantrieb 62 ein Riementrieb, kann aber auch ein Kettenantrieb, ein Hydraulikmotor oder ein Elektromotor sein. Dieser Antrieb 62 kann durch eine Kupplung 64 von der Förderschnecke 54 abgekoppelt werden. Zusätzlich ist die Förderschnecke 54 mit einer Bremse 66 versehen, um die Drehbewegung der Förderschnecke 54 gegenüber dem Rahmen 50 anzuhalten.

Die Förderschnecke 54 ist mit einem Förderschneckendrehmomentsensor 68 ausgestattet, der ein aktuelles Förderschneckendrehmomentsignal bereitstellt, das vom Drehmoment abhängt, das auf die Förderschnecke 54 wirkt. Der Förderschneckendrehmomentsensor 68 kann beliebig konfiguriert sein, beispielsweise als Dehnungsmessstreifen, die eine drehmomentbedingte Verwindung der Förderschnecke 54 messen. Der Förderschneckendrehmomentsensor 68 steht über eine Leitung 70 mit einer Steuerung 72 in elektronischer Verbindung, die eine elektronische Steuerungseinrichtung mit einem Speicher umfasst. Der Speicher der Steuerung 72 ist mit einem maximalen gewünschten Förderschneckendrehmomentsignal versehen. Die Steuerung 72 vergleicht das aktuelle Förderschneckendrehmomentsignal mit dem maximalen gewünschten Förderschneckendrehmomentsignal. Wenn das aktuelle Förderschneckendrehmomentsignal das maximale gewünschte Förderschneckendrehmomentsignal übersteigt, signalisiert die Steuerung 72 der Kupplung 64 über eine Leitung 73, den Förderschneckenantrieb 62 von der Förderschnecke 54 zu trennen (abzukoppeln). Der Bediener kann dann den Klumpen des Ernteguts, der die Förderschnecke 54 verstopft, entfernen. Die Bremse 66 ist nicht unbedingt zur Bremsung der Förderschnecke 54 nötig, weil die auf die Förderschnecke 54 wirkende Erntegutlast eine geeignete Bremskraft bereitstellen wird. Die Steuerung 72 kann sich physikalisch an der Erntegutbergungseinrichtung 16 oder auf dem Mähdrescher 10 befinden.

Die Welle 60 zur Steuerung der Finger 58 ist mit einem Steuerwellendrehmomentsensor 74 ausgestattet, der in Abhängigkeit von dem Drehmoment, das auf die Welle 60 ausgeübt wird, ein aktuelles Steuerwellendrehmomentsignal bereitstellt. Der Steuerwellendrehmomentsensor 74 kann beliebig konfiguriert sein, beispielsweise als Dehnungsmessstreifen, die eine drehmomentbedingte Verwindung der Welle 60 messen. Der Steuerwellendrehmomentsensor 68 steht über eine Leitung 76 mit der Steuerung 72 in elektronischer Verbindung. Der Speicher der Steuerung 72 ist mit einem maximalen gewünschten Steuerwellendrehmomentsignal versehen. Die Steuerung 72 vergleicht das aktuelle Steuerwellendrehmomentsignal mit dem maximalen gewünschten Steuerwellendrehmomentsignal. Wenn das aktuelle Steuerwellendrehmomentsignal das maximale gewünschte Steuerwellendrehmomentsignal übersteigt, signalisiert die Steuerung 72 der Bremse 66 über eine Leitung 75, die Drehung der Förderschnecke 54 abzubremsen. Die Bremse 66 ist zweckmäßig, um einen Schaden an den einziehbaren Fingern 58 zu vermeiden, da die rotierende Förderschnecke 54 einen hinreichenden Impuls hat, um die Finger 58 zu brechen.

Unterschiedliche Erntebedingungen können verschiedene maximale gewünschte Förderschneckendrehmomentsignale und maximale gewünschte Steuerwellendrehmomentsignale erfordern. Deshalb ist eine Bedienereingabeeinrichtung 78 in der Bedienerkabine 36 angeordnet. Die Bedienereingabeeinrichtung 78 kann einen einfachen Drehschalter, eine Tastatur oder andere Einrichtungen umfassen, um durch eine Leitung 80 die maximalen gewünschten Drehmomentsignale in den Speicher der Steuerung 72 einzugeben. Dabei werden den Erntebedingungen entsprechende, vom Bediener auswählbare Eingaben zugeordnet.

## Patentansprüche

1. Erntegutbergungseinrichtung (16) mit einem Rahmen (50), einer drehbar am Rahmen (50) befestigten Fördereinrichtung, einem Fördereinrichtungsantrieb zum Rotationsantrieb der Fördereinrichtung, einem Drehmomentsensor (74), der eingerichtet ist, das auf die Fördereinrichtung wirkende Drehmoment zu messen und ein aktuelles Drehmomentsignal bereitzustellen, und mit einer Steuerung (72), die einen Speicher aufweist, in dem ein maximales gewünschtes Drehmomentsignal gespeichert ist, wobei die Steuerung (72) eingerichtet ist, ein Anhalten der Fördereinrichtung zu veranlassen, wenn das aktuelle Drehmomentsignal das maximale gewünschte Drehmomentsignal überschreitet, **dadurch gekennzeichnet, dass** die Fördereinrichtung eine mit einziehbaren Fingern (58) ausgestattete Förderschnecke (54) ist, dass die Finger (58) frei drehbar auf einer Welle (60) zur Steuerung der Finger (58) befestigt sind und dass der Drehmomentsensor (74) das Drehmoment erfasst, das auf die Welle (60) ausgeübt wird.

2. Erntegutaufnahmeinrichtung (16) nach Anspruch 1, **dadurch gekennzeichnet, dass** ein weiterer Drehmomentsensor (68) das auf die Förderschnecke (54) ausgeübte Drehmoment erfasst.

3. Erntegutbergungseinrichtung (16) nach Anspruch 1 oder 2, **dadurch gekennzeichnet, dass** die Steuerung (72) eingerichtet ist, den Fördereinrichtungsantrieb (62) antriebsmäßig von der Fördereinrichtung zu trennen, insbesondere mittels einer Kupplung (64).

4. Erntegutbergungseinrichtung (16) nach einem der vorhergehenden Ansprüche, **dadurch gekennzeichnet, dass** die Steuerung (72) eingerichtet ist, die Fördereinrichtung mittels einer Bremse (66) zu bremsen.

5. Erntegutbergungseinrichtung (16) nach einem der Ansprüche 1 bis 4, **gekennzeichnet durch** eine mit der Steuerung (72) in Verbindung stehende Bedienereingabeeinrichtung (78), mit der das maximale gewünschte Drehmomentsignal definierbar ist.

## Claims

1. Harvest collecting device (16), having a frame (50), a conveying device mounted rotatably on the frame (50), a conveying device drive for rotational actuation of the conveying device, a torque sensor (74) which is equipped to measure the torque acting on the conveying device and to provide a current torque signal, and having a control unit (72) which has a memory in which a maximum desired torque signal is stored, the control (72) being equipped to cause stopping of the conveying device when the current torque signal exceeds the maximum desired torque signal, **characterised in that** the conveying device is a screw conveyor (54) equipped with retractable fingers (58), **in that** the fingers (58) are mounted freely rotatably on a shaft (60) for controlling the fingers (58) and **in that** the torque sensor (74) detects the torque which is exerted on the shaft (60).

2. Harvest collecting device (16) according to claim 1, **characterised in that** a further torque sensor (68) detects the torque exerted on the screw conveyor (54).

3. Harvest collecting device (16) according to claim 1 or 2, **characterised in that** the control unit (72) is equipped to separate the conveying device drive (62) on the drive-side from the conveying device, in particular by means of a coupling (64).

4. Harvest collecting device (16) according to one of the preceding claims, **characterised in that** the control unit (72) is equipped to brake the conveying device by means of a brake (66).

5. Harvest collecting device (16) according to one of the claims 1 to 4, **characterised by** an operator input device (78) which is in communication with the control unit (72) and with which the maximum desired torque signal can be defined.

## Revendications

1. Dispositif de ramassage de récolte (16) comportant un bâti (50), un convoyeur monté rotatif contre le bâti (50), un mécanisme d'entraînement du convoyeur, destiné à entraîner en rotation le convoyeur, un capteur de couple de rotation (74), qui est conçu pour mesurer le couple de rotation exercé sur le convoyeur et pour délivrer un signal du couple de rotation actuel, et comportant un dispositif de commande (72), qui comporte une mémoire, dans laquelle est enregistré le signal de couple de rotation maximum souhaité, le dispositif de commande (72) étant conçu pour engendrer une immobilisation du convoyeur lorsque le signal du couple de rotation actuel est supérieur au signal du couple de rotation maximum souhaité, **caractérisé en ce que** le convoyeur est une vis de transport (54), munie de doigts (58) rétractables, **en ce que** les doigts (58) sont fixés de manière librement rotative sur un arbre (60) destiné à commander les doigts (58) et **en ce que** le capteur de couple de rotation (74) détecte le couple de rotation qui est exercé sur l'arbre (60).

2. Dispositif de ramassage de récolte (16) selon la revendication 1, **caractérisé en ce qu'**un capteur de couple de rotation (68) supplémentaire détecte le couple de rotation exercé sur la vis de transport (54).

3. Dispositif de ramassage de récolte (16) selon la revendication 1 ou 2, **caractérisé en ce que** le dispositif de commande (72) est conçu pour supprimer la liaison d'entraînement entre le mécanisme d'entraînement du convoyeur (62) et le convoyeur, en particulier au moyen d'un embrayage (64).

4. Dispositif de ramassage de récolte (16) selon l'une quelconque des revendications précédentes, **caractérisé en ce que** le dispositif de commande (72) est conçu pour freiner le convoyeur au moyen d'un frein (66).

5. Dispositif de ramassage de récolte (16) selon l'une quelconque des revendications 1 à 4, **caractérisé par** une unité d'entrée d'instructions (78), qui est reliée au dispositif de commande (72) et par laquelle le signal de couple de rotation maximum souhaité peut être défini.
